# EUROPEAN PATENT APPLICATION

(11) **EP 4 787 225 A1**
(43) Date of publication of application: **05.08.2026**
(21) Application number: 24870461.1
(22) Date of filing: 12.09.2024
(51) Int. Cl.: G06K 7/14

(54) **METHOD, APPARATUS AND DEVICE FOR GENERATING ARTISTIC QR CODE, AND MEDIUM**

(30) Priority: 27.09.2023 CN 202311272261
(71) Applicant: Alipay (Hangzhou) Digital Service Technology Co., Ltd., Hangzhou, Zhejiang 310000 (CN)
(72) Inventor: LIU, Zhengbao, Hangzhou, Zhejiang 310063 (CN)
(74) Representative: Winter, Brandl - Partnerschaft mbB
(86) International application number: PCT/CN2024/118529
(87) International publication number: WO 2025/066917

(57) **Abstract**

Embodiments of this specification disclose an artistic two-dimensional code generation method, apparatus, and device, and a medium. The solution may include: obtaining target data used for being carried in a two-dimensional code image; determining a two-dimensional code template based on a length of encoded data corresponding to the target data; processing, based on a first quantity of mask patterns, an initial two-dimensional code image that is generated for the target data based on the two-dimensional code template, to obtain a plurality of two-dimensional code images, where the first quantity of mask patterns includes a plurality of different mask patterns; fusing the plurality of two-dimensional code images with a to-be-fused artistic image separately, to obtain a plurality of artistic two-dimensional code images; performing availability evaluation on the plurality of artistic two-dimensional code images according to a preset availability evaluation rule, to obtain an evaluation score corresponding to each artistic two-dimensional code image; and outputting an artistic two-dimensional code image having a highest evaluation score.

## Description

This application claims priority to Chinese Patent Application No. 202311272261.4, filed with the China National Intellectual Property Administration on September 27, 2023 and entitled "ARTISTIC TWO-DIMENSIONAL CODE GENERATION METHOD, APPARATUS, AND DEVICE, AND MEDIUM", which is incorporated herein by reference in its entirety.

### TECHNICAL FIELD

This application relates to the field of computer data processing technologies, and in particular, to an artistic two-dimensional code generation method, apparatus, and device, and a medium.

### BACKGROUND

With the development of computer technologies, styles of two-dimensional codes are diversified, and a rise of artistic two-dimensional codes attracts more attention on networks. An artistic two-dimensional code in a conventional technology is usually an artistic two-dimensional code obtained, based on a two-dimensional code image and an artistic image that are input by a user, by directly fusing two images by using a pure artificial intelligence (Artificial Intelligence, AI) model. However, such an artistic two-dimensional code has uncertainty, and the generated artistic two-dimensional code may not meet a service requirement.

### SUMMARY

Embodiments of this specification provide an artistic two-dimensional code generation method, apparatus, and device, and a medium, to resolve a problem of uncertainty in an existing artistic two-dimensional code generation method.

To resolve the foregoing technical problem, embodiments of this specification are implemented as follows.

An embodiment of this specification provides an artistic two-dimensional code generation method, including:
obtaining target data used for being carried in a two-dimensional code image;
determining a two-dimensional code template based on a length of encoded data corresponding to the target data;
processing, based on a first quantity of mask patterns, an initial two-dimensional code image that is generated for the target data based on the two-dimensional code template, to obtain a plurality of two-dimensional code images, where the first quantity of mask patterns includes a plurality of different mask patterns;
fusing the plurality of two-dimensional code images with a to-be-fused artistic image separately, to obtain a plurality of artistic two-dimensional code images;
performing availability evaluation on the plurality of artistic two-dimensional code images according to a preset availability evaluation rule, to obtain an evaluation score corresponding to each artistic two-dimensional code image; and
outputting an artistic two-dimensional code image having a highest evaluation score.

An embodiment of this specification provides an artistic two-dimensional code generation apparatus, including:
a target data obtaining module, configured to obtain target data used for being carried in a two-dimensional code image;
a two-dimensional code template determining module, configured to determine a two-dimensional code template based on a length of encoded data corresponding to the target data;
a mask processing module, configured to process, based on a first quantity of mask patterns, an initial two-dimensional code image that is generated for the target data based on the two-dimensional code template, to obtain a plurality of two-dimensional code images, where the first quantity of mask patterns includes a plurality of different mask patterns;
a fusion module, configured to fuse the plurality of two-dimensional code images with a to-be-fused artistic image separately, to obtain a plurality of artistic two-dimensional code images;
a scoring module, configured to perform availability evaluation on the plurality of artistic two-dimensional code images according to a preset availability evaluation rule, to obtain an evaluation score corresponding to each artistic two-dimensional code image; and
an image output module, configured to output an artistic two-dimensional code image having a highest evaluation score.

An embodiment of this specification provides an artistic two-dimensional code generation device, including:
at least one processor; and
a memory in communication connection with the at least one processor; where
the memory stores instructions executable by the at least one processor, and the instructions are executed by the at least one processor, to cause the at least one processor to:
   obtain target data used for being carried in a two-dimensional code image;
   determine a two-dimensional code template based on a length of encoded data corresponding to the target data;
   process, based on a first quantity of mask patterns, an initial two-dimensional code image that is generated for the target data based on the two-dimensional code template, to obtain a plurality of two-dimensional code images, where the first quantity of mask patterns includes a plurality of different mask patterns;
   fuse the plurality of two-dimensional code images with a to-be-fused artistic image separately, to obtain a plurality of artistic two-dimensional code images;
   perform availability evaluation on the plurality of artistic two-dimensional code images according to a preset availability evaluation rule, to obtain an evaluation score corresponding to each artistic two-dimensional code image; and
   output an artistic two-dimensional code image having a highest evaluation score.

An embodiment of this specification provides a computer-readable medium, where the computer-readable medium stores computer-readable instructions, and the computer-readable instructions are executable by a processor to implement an artistic two-dimensional code generation method.

At least one embodiment in this specification can achieve the following beneficial effects: A corresponding two-dimensional code template is determined based on the length of the encoded data corresponding to the target data, the plurality of two-dimensional code images are generated based on the two-dimensional code template, the target data, and the first quantity of mask patterns, the plurality of two-dimensional code images are fused with the to-be-fused artistic image, to obtain the plurality of artistic two-dimensional code images, and each artistic two-dimensional code image is scored, to output an artistic two-dimensional code image having a highest score. In this way, a user can obtain an artistic two-dimensional code image having high availability, thereby meeting a service requirement.

### BRIEF DESCRIPTION OF THE DRAWINGS

To describe the technical solutions in embodiments of this specification or in a conventional technology more clearly, the following briefly describes the accompanying drawings for describing embodiments or the conventional technology. It is clear that the accompanying drawings in the following descriptions show merely some embodiments described in this application, and a person of ordinary skill in the art may still derive other drawings from these accompanying drawings without creative efforts.
FIG. 1 is a schematic diagram of an application scenario of an artistic two-dimensional code generation method according to an embodiment of this specification;
FIG. 2 is a schematic flowchart of an artistic two-dimensional code generation method according to an embodiment of this specification;
FIG. 3 is a swimlane diagram of an artistic two-dimensional code generation method according to an embodiment of this specification;
FIG. 4 is a schematic diagram of a structure of an artistic two-dimensional code generation apparatus according to an embodiment of this specification; and
FIG. 5 is a schematic diagram of a structure of an artistic two-dimensional code generation device according to an embodiment of this specification.

### DETAILED DESCRIPTION

To make objectives, technical solutions, and advantages of one or more embodiments of this specification clearer, the following clearly and completely describes the technical solutions of one or more embodiments of this specification with reference to specific embodiments of this specification and corresponding accompanying drawings. It is clear that the described embodiments are merely some rather than all of embodiments of this specification. All other embodiments obtained by a person of ordinary skill in the art based on embodiments of this specification without creative efforts shall fall within the protection scope of one or more embodiments of this specification.

The following describes in detail the technical solutions provided in embodiments of this specification with reference to the accompanying drawings.

In a conventional technology, with the development of computer technologies, styles of two-dimensional codes are diversified, and a rise of artistic two-dimensional codes attracts more attention on networks. On a carrier of a two-dimensional code, there is a demand of brand personalized expression from a merchant end and a client's demand of obtaining hunting traffic of an artistic code. However, an existing artistic two-dimensional code is usually generated, based on a two-dimensional code image and an artistic image that are input by a user, by simply fusing two images by using a pure artificial intelligence (Artificial Intelligence, AI). There is uncertainty. A possibly generated artistic two-dimensional code greatly differs from a service requirement. For example, a probability that the generated artistic two-dimensional code is identified is low, and an artistic image is aesthetically unappealing.

To resolve the defects in the conventional technology, the following embodiments are provided in this solution. For ease of understanding, some concepts are first described herein.

Mask: The mask may indicate that a string of binary codes perform a bit AND operation on a target field, and is used to shield a current input bit. A data code element and an error correction code element may be processed, to avoid excessive black or white blocks in a two-dimensional code. An existing technology includes eight different mask patterns.

Error correction level: The error correction level may represent a value of an error tolerance rate. Different error correction levels have different ratios of a maximum area allowed to be blocked to a total area when a two-dimensional code can be normally scanned.

Two-dimensional code mirroring: A two-dimensional code image is flipped horizontally or vertically, so that a two-dimensional code image on which mirroring is performed and a two-dimensional code image on which mirroring is not performed visually present an effect of left-right symmetry or up-down symmetry.

Two-dimensional code rotation: A two-dimensional code image is rotated based on a particular angle, for example, the two-dimensional code image may be rotated clockwise or anticlockwise by a particular angle, such as 30 degrees, 45 degrees, 90 degrees, or 180 degrees.

Two-dimensional code version: The two-dimensional code version may represent a basic image used for generating a two-dimensional code. Different two-dimensional code templates have different data capacities. A higher version indicates a larger data capacity. Existing two-dimensional code versions may include forty versions having different data capacities.

Style transfer: A style image is provided, any image is converted into the style, and content of the any image is retained as much as possible.

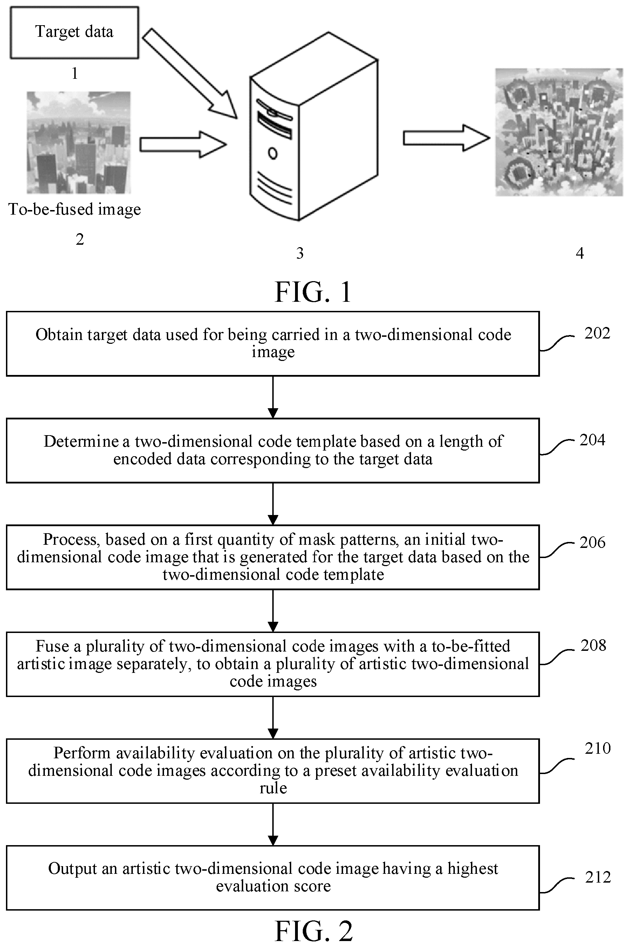

FIG. 1 is a schematic diagram of an application scenario of an artistic two-dimensional code generation method according to an embodiment of this specification.

As shown in FIG. 1, the solution may mainly include: target data 1, a to-be-fused artistic image 2, a server 3, and a target artistic two-dimensional code image 4. The target data 1 may be a website, a link, a character that needs to be identified, or the like, may represent content carried in a two-dimensional code, and may be parsed and identified after the two-dimensional code is scanned. The server 3 may select an appropriate two-dimensional code template based on a length of the target data 1. A data capacity of the two-dimensional code template needs to be greater than a length of encoded data of the target data. An error correction level in the two-dimensional code template may be set by a user, or may be an error correction level of a corresponding security level that is selected by the server 3 based on a purpose of the target data. The server 3 may perform data padding on the two-dimensional code template based on the target data, to obtain an initial two-dimensional code image, and perform processing such as masking and mirroring based on the initial two-dimensional code image, to obtain a plurality of two-dimensional code images for same target data. The server 3 may perform fusion processing on each two-dimensional code image based on the obtained to-be-fused artistic image 2, to obtain a plurality of artistic two-dimensional code images, perform availability scoring on each artistic two-dimensional code image according to a preset scoring rule, and may output an artistic two-dimensional code image having a highest score as a target artistic two-dimensional code image 4, thereby obtaining an artistic two-dimensional code image having high availability.

Next, an artistic two-dimensional code generation method according to an embodiment of this specification is described in detail below with reference to the accompanying drawings.

FIG. 2 is a schematic flowchart of an artistic two-dimensional code generation method according to an embodiment of this specification. From a program perspective, a procedure may be executed by a program or an application client mounted on an application server.

As shown in FIG. 2, the procedure may include the following steps.

Step 202: Obtain target data used for being carried in a two-dimensional code image.

The target data in this embodiment of this specification may include at least one of characters such as an uppercase letter, a lowercase letter, a digit, a Chinese character, and a special character. The target data may be a string of characters having functions such as payment, payment collection, information obtaining, website jump, and activity pushing. Specifically, the target data may be a website, a link, a character that needs to be identified, or the like. A server may perform processing based on character data in the target data, and may pad a result obtained through the processing into the two-dimensional code image, so that a user can complete a corresponding function when scanning the two-dimensional code image.

Step 204: Determine a two-dimensional code template based on a length of encoded data corresponding to the target data.

In this embodiment of this specification, the server may encode the target data according to a preset rule, to obtain the length of the encoded data corresponding to the target data. The two-dimensional code template may include forty different versions. Two-dimensional code templates of different versions have different data capacities, and a two-dimensional code template of a higher version has a larger data capacity. For example, a two-dimensional code template of a version 1 has a size of 21×21 matrix, a two-dimensional code template of a version 2 has a size of 25×25 matrix, and a two-dimensional code template of a version 40 has a size of 177×177 matrix. The server may select, based on a data capacity of a two-dimensional code template of each version, a two-dimensional code template that can accommodate the length of the encoded data corresponding to the target data, to determine a two-dimensional code template used for subsequently generating an artistic two-dimensional code.

Step 206: Process, based on a first quantity of mask patterns, an initial two-dimensional code image that is generated for the target data based on the two-dimensional code template, to obtain a plurality of two-dimensional code images, where the first quantity of mask patterns includes a plurality of different mask patterns.

The mask pattern in this embodiment of this specification may be an existing QR two-dimensional code mask pattern. The first quantity may represent a quantity greater than 1, for example, three mask patterns, four mask patterns, or five mask patterns. The initial two-dimensional code image may represent an image obtained by padding, into the two-dimensional code template, an encoded binary stream obtained based on the target data. The server may perform mask processing on the initial two-dimensional code image based on each mask image, to obtain the plurality of two-dimensional code images.

Step 208: Fuse the plurality of two-dimensional code images with the to-be-fused artistic image separately, to obtain a plurality of artistic two-dimensional code images.

The to-be-fused artistic image in this embodiment of this specification may be a picture or may be some description information. The user may select images that need to be fused, to provide some feature description information, and an AI image generation model generates an image based on the feature information. The server may fuse each two-dimensional code image with the to-be-fused artistic image in a preset image fusion manner, for example, may fuse each two-dimensional code image with the to-be-fused artistic image by using an existing AI model, to output the plurality of artistic two-dimensional code images. The existing AI model may include one of models such as a supervised model, an unsupervised/self-supervised model, a GAN model, a significance model, a transform/self-attention model, a task driven model, a fusion model under different resolutions, and a guided filtering auxiliary model that are for infrared and visible light image fusion. The artistic two-dimensional code image may include some or all features of the to-be-fused artistic image, and an image that may be successfully identified. The artistic two-dimensional code image may be a static image or a dynamic image. Alternatively, fusion may be performed in another manner. This is not specifically limited herein.

Step 210: Perform availability evaluation on the plurality of artistic two-dimensional code images according to a preset availability evaluation rule, to obtain an evaluation score corresponding to each artistic two-dimensional code image.

The preset availability evaluation rule in this embodiment of this specification may represent a rule for evaluating availability of the artistic two-dimensional code image. The availability may include aspects such as an identification rate and aesthetics. For example, the preset availability evaluation rule may indicate that a feature included in the artistic two-dimensional code is compared with a feature included in the to-be-fused artistic image, and the evaluation score of each artistic two-dimensional code image may be obtained based on an inclusion degree of the feature. Alternatively, the preset availability evaluation rule may indicate that each artistic two-dimensional code is evaluated based on an aesthetic degree of each artistic two-dimensional code. Alternatively, the preset availability evaluation rule may indicate that a data sequence included in the artistic two-dimensional code image is compared with a data sequence used when the artistic two-dimensional code is generated, and each artistic two-dimensional code may be evaluated based on an amount of abnormal data.

Step 212: Output an artistic two-dimensional code image having a highest evaluation score.

In this embodiment of this specification, the artistic two-dimensional code images may be sorted based on evaluation scores, and the artistic two-dimensional code image having a highest evaluation score is output. During actual application, the artistic two-dimensional code image having a highest evaluation score may be output, or a plurality of artistic two-dimensional code images having highest evaluation scores may be output. For example, a plurality of artistic two-dimensional code images having evaluation scores higher than a preset threshold are output. A specific quantity of output artistic two-dimensional code images is not limited herein.

During actual application, if the plurality of artistic two-dimensional code images are scored, the plurality of artistic two-dimensional code images may be scored in a preset order, and the artistic two-dimensional code image having a highest evaluation score may be determined by using a bubbling method, and the artistic two-dimensional code image having a highest evaluation score is output. If the plurality of artistic two-dimensional code images are scored, and all artistic two-dimensional codes are commented in a non-repeatable manner, the artistic two-dimensional code images may be arranged based on the evaluation scores in descending order, and an artistic two-dimensional code image that ranks first may be output. In this way, an artistic two-dimensional code having high availability is output.

It should be understood that, in one or more embodiments of this specification, orders of some of the steps of the method may be exchanged with each other based on an actual requirement, or some of the steps may be omitted or deleted.

According to the method in FIG. 2, a corresponding two-dimensional code template is determined based on the length of the encoded data corresponding to the target data, the plurality of two-dimensional code images are generated based on the two-dimensional code template, the target data, and the first quantity of mask patterns; the plurality of two-dimensional code images are fused with the to-be-fused artistic image, to obtain the plurality of artistic two-dimensional code images; and each artistic two-dimensional code image is scored, to output the artistic two-dimensional code image having a highest score. In this way, the user can obtain an artistic two-dimensional code image having high availability, thereby meeting a service requirement.

According to the method of FIG. 2, this embodiment of this specification further provides some specific implementations of the method. Descriptions are provided below.

To improve quality of an output artistic two-dimensional code, mirroring may be performed on a two-dimensional code image, to obtain more artistic two-dimensional codes for selection. Optionally, the method in this embodiment of this specification may further include:
performing mirroring on the initial two-dimensional code image, to obtain a mirror initial two-dimensional code image; and
processing the mirror initial two-dimensional code image based on a second quantity of mask patterns, to obtain a plurality of mirror two-dimensional code images, where the second quantity of mask patterns includes one or more different mask patterns.

The fusing the plurality of two-dimensional code images with a to-be-fused artistic image separately specifically includes:
fusing the plurality of two-dimensional code images and the plurality of mirror two-dimensional code images with the to-be-fused artistic image separately.

In this embodiment of this specification, the initial two-dimensional code image may be processed according to an existing mirroring method. The second quantity may be a quantity greater than or equal to 1, and may be the same as or different from the foregoing first quantity. The second quantity of mask patterns may be selected from the foregoing first quantity of mask patterns, or may be a second quantity of mask patterns selected from all existing mask patterns. In this embodiment of this specification, the two-dimensional code image on which the mirroring is performed and the two-dimensional code image on which the mirroring is not performed may be separately processed together with the to-be-fused artistic image, to obtain a larger quantity of to-be-evaluated artistic two-dimensional code images.

During actual application, mask processing may be first performed and then mirroring is performed. Specifically, mirroring may be performed on some or all of the plurality of two-dimensional code images obtained by processing, based on the first quantity of mask patterns, the initial two-dimensional code image that is generated for the target data based on the two-dimensional code template.

As a way of extending a code base, in this embodiment of this specification, a plurality of code images may be obtained by rotating the two-dimensional code image. In this way, it is more beneficial to generation of an artistic two-dimensional code image having high availability. Optionally, the method in this embodiment of this specification may further include:
rotate the initial two-dimensional code image, to obtain a rotated initial two-dimensional code image;
processing the rotated initial two-dimensional code image based on a third quantity of mask patterns, to obtain a plurality of rotated two-dimensional code images, where the third quantity of mask patterns includes one or more different mask patterns.

The fusing the plurality of two-dimensional code images with a to-be-fused artistic image separately specifically includes:
fusing the plurality of two-dimensional code images and the plurality of rotated two-dimensional code images with the to-be-fused artistic image separately.

The image may be rotated according to a preset rotation rule, and the rotation rule may include information such as a rotation angle and a rotation direction. For example, the initial two-dimensional code image may be rotated in a preset rotation direction by a preset rotation angle. A to-be-rotated initial two-dimensional code image may be rotated one or more times by a preset unit rotation angle in the preset rotation direction. For example, the to-be-rotated initial two-dimensional code image may be rotated by 45 degrees as a unit. If the to-be-rotated initial two-dimensional code image is rotated once, it is equivalent to that a two-dimensional code is rotated by 45 degrees. If the to-be-rotated initial two-dimensional code image is rotated twice, it is equivalent to that a two-dimensional code is rotated by 90 degrees. The rotation angle may alternatively be set to perform non-repeatable rotation. For example, the rotation angle is set to 30 degrees, and the image is rotated by 30 degrees clockwise.

One or more rotated two-dimensional code images may be generated for one initial two-dimensional code image. If there are a plurality of initial two-dimensional code images, some of the initial two-dimensional code images may alternatively be rotated, or same or different initial two-dimensional code images may be processed according to different rotation rules. This is not specifically limited herein.

During actual application, there may be a plurality of two-dimensional code templates that can accommodate the target data. In an implementation, in this embodiment of this specification, a plurality of different two-dimensional code templates may be selected to process the data, to obtain a plurality of initial two-dimensional code images, so that there is wider selection for subsequent selection of an artistic two-dimensional code image meeting a service requirement. Optionally, the two-dimensional code template in this embodiment of this specification includes a plurality of two-dimensional code templates whose capacity is greater than the length of the encoded data corresponding to the target data.

The processing, based on a first quantity of mask patterns, an initial two-dimensional code image that is generated for the target data based on the two-dimensional code template specifically includes:
processing, for any two-dimensional code template in the plurality of two-dimensional code templates based on the first quantity of mask patterns, the initial two-dimensional code image that is generated for the target data based on the any two-dimensional code template.

One two-dimensional code template may include information such as a two-dimensional code version and an error correction level. The error correction level may be selected by the user, or may be determined by the server based on factors such as usage of the target data. During actual application, data capacities of two-dimensional code templates for two-dimensional code versions and corresponding different error correction levels are known, and a two-dimensional code template whose capacity is greater than the length of the encoded data may be selected based on the length of the encoded data of the target data.

During actual application, a preset quantity of two-dimensional code templates that can accommodate the encoded data corresponding to the target data may be randomly selected. Alternatively, the preset quantity of two-dimensional code templates that can accommodate the encoded data corresponding to the target data may be selected based on two-dimensional code versions version in descending order. Alternatively, a two-dimensional code template may be selected based on an application scenario or a function of the artistic two-dimensional code image. For example, if the scenario is that an artistic two-dimensional code is used for payment, the scenario may be used as a scenario in which an identification rate is in priority, and one or more two-dimensional code versions that are of a lower version and that can accommodate the encoded data corresponding to the target data may be selected from the two-dimensional code versions. If the scenario is that an artistic two-dimensional code is used for advertising, the scenario may be used as a scenario in which beautification is in priority, and one or more two-dimensional code versions that are of a higher version and that can accommodate the encoded data corresponding to the target data may be selected from the two-dimensional code versions.

During actual application, after the two-dimensional code template and the encoded data corresponding to the target data are determined, the initial two-dimensional code image may be determined. In this embodiment of this specification, a plurality of initial two-dimensional code images based on different two-dimensional code templates are obtained, and mask processing is performed on different initial two-dimensional code images, to obtain a plurality of two-dimensional code images. It may be understood that, when there are M two-dimensional code templates, and the first quantity of mask patterns are N mask patterns, N×M two-dimensional code images may be obtained.

Optionally, the plurality of two-dimensional code templates in this embodiment of this specification may include two-dimensional code templates of different versions and/or two-dimensional code templates of different error correction levels.

There may be four error correction levels of a two-dimensional code, which are respectively H, Q, M, and L. The two-dimensional code templates of different versions in this embodiment of this specification may include a plurality of two-dimensional code templates having a same error correction level but different two-dimensional code versions. For example, there are two two-dimensional code templates of different versions. A two-dimensional code version of a two-dimensional code template 1 is version 10, and an error correction level is H. A two-dimensional code version of a two-dimensional code template 2 is version 15, and an error correction level is also H. The two-dimensional code templates of different versions may alternatively include a plurality of two-dimensional code templates having different error correction levels but a same two-dimensional code version. For example, a two-dimensional code version of a two-dimensional code template 1 is version 10, and an error correction level is H; and a two-dimensional code version of a two-dimensional code template 3 is version 10, and an error correction level is L. Therefore, two-dimensional code templates of different combinations may be obtained, and a plurality of different artistic two-dimensional codes may be obtained, so that an output artistic two-dimensional code better meets a service requirement.

During actual application, a higher two-dimensional code version indicates a larger data capacity; a higher error correction level of a two-dimensional code indicates a larger amount of data included in an error correction code, and a smaller amount of another data that can be padded. If the user does not set the error correction level, the server may determine the error correction level of the two-dimensional code based on information such as a requirement of the user and usage of the two-dimensional code. It may be understood that a higher error correction level indicates a lower requirement on successful identification of the two-dimensional code. If the user sets the error correction level, processing may be performed based on the error correction level set by the user.

In this embodiment of this specification, an appropriate coding scheme may be selected based on a character type of the target data, so that generated encoded data can meet a requirement. Optionally, the method in this embodiment of this specification may further include:
determining a coding scheme based on a character type included in the target data; and
encoding the target data according to the coding scheme, to obtain the encoded data.

The character type included in the target data may include at least one character type such as an uppercase letter, a lowercase letter, a digit, and a special symbol. The coding scheme may include coding schemes such as a numeric mode (digital coding), an alphanumic mode (character coding), a byte mode (byte coding), and a Kanji mode (double-byte coding). Different character types can be encoded according to different coding schemes, and a quantity of bits occupied by one character is also different. For example, a coding scheme of the numeric mode can only be used to encode a digit, but cannot encode a character of another character type. However, one character occupies 3.3 bits, and occupies a smallest quantity of bits in the foregoing coding scheme. In this embodiment of this specification, a coding scheme enabling the length of the obtained encoded data to be shortest may be selected based on the character type included in the target data.

In this embodiment of this specification, the target data may be encoded according to a plurality of coding schemes, and then the encoded data having a shortest length is selected from encoding results as a code for generating a two-dimensional code image. In addition, when the length of the encoded data corresponding to the target data is short, a two-dimensional code version that is of a low version may also be selected as far as possible, which is beneficial to improvement of an identification rate.

Optionally, the method in this embodiment of this specification may further include:
encoding the target data according to a plurality of coding schemes, to obtain a plurality of pieces of candidate encoded data; and
selecting encoded data having a shortest length from the plurality of pieces of candidate encoded data as the encoded data corresponding to the target data.

A same character is encoded according to different coding schemes, and obtained encoded data may have different bit lengths. In this embodiment of this specification, candidate encoded data obtained according to different coding schemes may have different data lengths. The data length may represent a quantity of pieces of binary data included in the encoded data. Shortest encoded data may be determined as the encoded data used by the target data when the two-dimensional code image is generated. Therefore, a proportion of binary data corresponding to the target data in the two-dimensional code template can be reduced, and impact on the target data when the two-dimensional code image is fused with the to-be-fused artistic image can be reduced. In addition, a shortest code is also beneficial to selection of a two-dimensional code template having a low version, and is beneficial to improvement of an identification rate.

The server may select, based on a character type in the target data, a plurality of coding schemes that can be used for encoding, to encode the target data, and select the shortest encoded data. An example in which the target data is 01aaaED is used. Because a lowercase letter cannot be encoded in the numeric mode (digital coding) and the alphanumeric mode (character coding), the server cannot encode target data including a lowercase letter only according to the two coding schemes, but can encode the target data including the lowercase letter in a byte mode (byte coding). The target data may be encoded only in the byte mode (byte coding), or the target data may be encoded in a combination of at least one of the numeric mode (digital coding) and the alphanumeric mode (character coding) and the byte mode (byte coding). Encoded data having a shortest length may be selected from encoded target data.

In an implementation, optionally, the encoding the target data in this embodiment of this specification may include:
if the target data includes a digit, encoding the data according to a first coding rule; and
if the target data includes an uppercase letter, encoding the uppercase letter according to a second coding rule.

The first coding rule may represent a rule that can be used for encoding a digit, for example, encoding the digit according to a coding scheme of the numeric mode corresponding to a numeric digit mode. The second coding rule may represent a rule that can be used for encoding an uppercase letter, for example, encoding the uppercase letter according to a coding scheme of the alphanumeric mode corresponding to an alphanumeric-digit-letter-special character mode.

During actual application, if character data in the target data includes a lowercase letter, the lowercase letter may be further encoded according to a third coding rule. For example, the lowercase letter is encoded according to a coding scheme of the byte mode corresponding to a byte ASCII mode. If the target data includes a plurality of different character types, each character in the target data may be further encoded according to a fourth coding rule. When the target data includes a plurality of different types of character data, a hybrid coding mode may be used. The hybrid coding mode may be determined based on a correspondence between the character type in the target data and the encoding length. For example, the target data is H:/3.M. Based on the correspondence between the character type and the encoding length, for a digit, the coding scheme of the numeric mode corresponds to a shortest encoding length, and for an uppercase letter and a special symbol, the coding scheme of the alphanumeric mode corresponds to a shortest encoding length. A digit-character hybrid coding mode may be selected, so that after H:/3.M is encoded, an obtained encoding length is shortest.

During actual application, the target data may alternatively be encoded by selecting, based on the character type in the target data, different coding rules. For example, encoding is completed only in the byte mode, or another coding scheme is obtained, and then an encoding result meeting a user requirement is selected for subsequent processing. During actual application, a length of an encoding result obtained through encoding in the byte mode is usually greater than a length of an encoding result obtained in another mode such as the foregoing hybrid coding mode. Therefore, the coding scheme of the byte mode is not recommended for data that can be processed according to another coding scheme. It is clear that the coding scheme may alternatively be determined based on an actual requirement.

In an implementation, optionally, the plurality of coding schemes in this embodiment of this specification may include a coding scheme for encoding in a single coding mode and/or a coding scheme for encoding in a hybrid coding mode.

In this embodiment of this specification, the single coding mode may represent a coding scheme in which the target data is encoded according to one coding scheme, and the hybrid coding mode may represent a coding scheme in which the target data is encoded according to at least two coding schemes. For example, the target data is 10Aa, and 10Aa may be encoded according to the coding scheme of the byte mode (byte coding) corresponding to the single coding mode, to obtain encoded data. Alternatively, a digit character, an uppercase-letter character, and a lowercase-letter character in the target data may be respectively encoded according to the coding scheme of the numeric mode (digital coding), the coding scheme of the alphanumeric mode (character coding), and the coding scheme of the byte mode that correspond to the hybrid coding mode, to obtain the encoded data corresponding to the target data.

In this embodiment of this specification, a specific coding mode that is used may be determined based on a length of a quantity of bits corresponding to one character in various coding schemes and a character type that can be encoded according to each coding scheme. Main objectives of both the single coding mode and the hybrid coding mode are to reduce a quantity of bits occupied by the target data in the two-dimensional code template, and improve an identification rate of a two-dimensional code.

In an implementation, the artistic two-dimensional code may be evaluated based on an abnormal binary value existing in the artistic two-dimensional code image. Optionally, in this embodiment of this specification, the performing availability evaluation on the plurality of artistic two-dimensional code images according to a preset availability evaluation rule may specifically include:
obtaining, for any artistic two-dimensional code image in the plurality of artistic two-dimensional code images, binary values of a plurality of sampling points in the any artistic two-dimensional code image;
determining, based on the binary values of the plurality of sampling points, an abnormal sampling point existing in the plurality of sampling points, where a binary value of the abnormal sampling point is inconsistent with a preset binary value, and the preset binary value is a binary value in an encoded data stream used for generating the initial two-dimensional code image; and
performing identifiability evaluation on each artistic two-dimensional code image based on a quantity of abnormal sampling points.

In this embodiment of this specification, the sampling point may represent a unit rectangle obtained by dividing, based on a matrix of the two-dimensional code template for generating the artistic two-dimensional code, the two-dimensional code template, and may be used as a sampling position of sample data for verifying whether the artistic two-dimensional code image meets a requirement. The binary value may be obtained by performing binarization processing on an artistic two-dimensional code. The preset binary value may represent a binary value padded into each unit rectangle in a process of generating the artistic two-dimensional code image. The abnormal sampling point may indicate that a binary value corresponding to the sampling point is different from the binary value padded in the process of generating the artistic two-dimensional code. The encoded data stream may represent a string of binary data obtained by arranging, in a padding order, binary values corresponding to unit rectangles in the initial two-dimensional code image. The identifiability evaluation may represent a proportion of the abnormal sampling point in total sampling points, and the artistic two-dimensional code image may be scored based on the proportion. For example, there are 200 sampling points, and there are four abnormal sampling points. A proportion may be 2%. Therefore, the artistic two-dimensional code image may be evaluated to have a score of 98.

To make a binary value corresponding to a sampling point more accurate, optionally, the method in this embodiment of this specification may further include:
performing binarization processing on the any artistic two-dimensional code image, to obtain a binary image;
obtaining a plurality of sampling points in the binary image, where one sampling point corresponds to one unit rectangle in the two-dimensional code template; and
determining a binary value of each sampling point in the binary image.

A binarization processing procedure for the artistic two-dimensional code in this embodiment of this specification may be: performing grayscale processing on the artistic two-dimensional code, to obtain a grayscale artistic two-dimensional code image; removing mask pattern included in the grayscale artistic two-dimensional code, to obtain a first two-dimensional code image; determining whether the artistic two-dimensional code image has undergone mirroring; if mirroring is performed on the artistic two-dimensional code image, performing anti-mirroring on the first two-dimensional code image, to obtain a second two-dimensional code image, and determining binary values corresponding to the unit rectangles based on brightness corresponding to the unit rectangles in the second two-dimensional code image, to obtain a binary image including the binary values.

In an implementation, aesthetics of the artistic two-dimensional code image may be further evaluated. Optionally, in this embodiment of this specification, the performing availability evaluation on the plurality of artistic two-dimensional code images according to a preset availability evaluation rule may specifically include:
evaluating each artistic two-dimensional code image by using a pre-trained beautification degree evaluation model.

The beautification degree evaluation model in this embodiment of this specification may be obtained by training an existing model using a marked sample. The marking may be manual marking or model marking. The existing model may include a classification model, an image identification model, and the like. During actual application, a score may be further calculated based on a feature of an image included in the artistic two-dimensional code and a weight of the feature. Alternatively, whether the artistic two-dimensional code includes a main feature may be determined based on a position relationship between each feature and the artistic two-dimensional code, to determine a level of a score. Alternatively, scoring may be performed based on clearness and completeness of each feature.

During actual application, the server may perform weighted summation in manners such as beautification degree evaluation, identifiability evaluation, and feature evaluation, to obtain a total evaluation score. An artistic two-dimensional code image having a high comprehensive score may be obtained and used as a target artistic two-dimensional code image. For example, comprehensive evaluation is performed on the artistic two-dimensional code by using identifiability evaluation and beautification degree evaluation. A weight of the identifiability evaluation may be 0.7, and a weight of the beautification degree evaluation may be 0.3. An identifiability evaluation score of an artistic two-dimensional code image 1 is 98, a beautification degree evaluation score of the artistic two-dimensional code image 1 is 95, and a total score 97.1 of the artistic two-dimensional code image 1 can be obtained. An identifiability evaluation score of an artistic two-dimensional code image 2 is 90, a beautification degree evaluation score of the artistic two-dimensional code image 2 is 99, and a total score 92.7 of the artistic two-dimensional code image 2 can be obtained. If an output artistic two-dimensional code image has a highest score, the artistic two-dimensional code image 1 may be output. If an output artistic two-dimensional code image has a score greater than or equal to a threshold score of 90, the artistic two-dimensional code image 1 and the artistic two-dimensional code image 2 may be output.

To enable a generated artistic two-dimensional code image to better reflect a feature of an artistic image, and improve a success rate of identifying the artistic two-dimensional code image, optionally, a method for generating the initial two-dimensional code image in this embodiment of this specification may include:
obtaining a first region image that is in the to-be-fused artistic image and that corresponds to a padding region in the two-dimensional code template, where the padding region is a region in the two-dimensional code template for placing a padding bit character in an encoded data stream;
generating, based on a binary sequence value corresponding to the first region image, a padding data sequence in a padding bit region in the encoded data stream corresponding to the two-dimensional code template; and
generating the initial two-dimensional code image based on the encoded data corresponding to the target data and the padding data sequence.

In this embodiment of this specification, the padding region may represent a padding bit character in the encoded data stream, or may be referred to as a padding symbol, a padding code, or the like. In a region of a position of the padding region, the padding region in the two-dimensional code template may be aggregately distributed, or may be discretely distributed. Aggregated distribution may be understood as that display positions of characters in a template are adjacent, consecutive, or a quantity of continuously adjacent characters is greater than a preset quantity, and most characters are aggregated together. Discrete distribution may be understood as that display positions of characters in a template are dispersed, and display positions of most characters are not aggregated together, or may be understood as that there is a small quantity of continuously adjacent characters. The first region image may be a set of sub-images that are in the to-be-fused artistic image and that correspond to the unit rectangles of the padding region, after the two-dimensional code template and the to-be-fused artistic image are adjusted to a same size.

The binary sequence value in this embodiment of this specification may represent data obtained by performing binarization processing on sub-images in the first region image in the to-be-fused artistic image. Specifically, grayscale processing may be first performed on the first region image, and binary data of the sub-images is determined based on a relationship between a grayscale value of each sub-image and a preset grayscale threshold that are obtained through the grayscale processing. During actual application, a sorting position of each binary character in the binary sequence value in the padding data sequence may be determined in a padding order of two-dimensional codes, so that a two-dimensional code image generated by using the encoded data stream including the padding data sequence can present the first region image or an image feature of the to-be-fused artistic image.

During actual application, the padding region in the two-dimensional code template may alternatively be padded in a padding region processing manner in a conventional technology. For example, 11101100 00010001 is used for repetition, and an obtained repeated data sequence having a same length as a to-be-padded length in the padding region may be used as a data sequence of the padding region.

To reduce data interference caused by a mask to a padding region of a data sequence corresponding to a padded first region image, optionally, in this embodiment of this specification, the processing, based on a first quantity of mask patterns, an initial two-dimensional code image that is generated for the target data based on the two-dimensional code template may specifically include:
processing another region different from the padding region in the initial two-dimensional code image based on the first quantity of mask patterns.

The another region in this embodiment of this specification may include a region that is in the two-dimensional code template and that is used for being padded with data such as the target data, the error correction code, or an 8-bit padding code. Processing may be performed in an existing processing manner of adding a mask pattern. For example, XOR processing is performed based on binary data of the mask pattern and binary data of the initial two-dimensional code image, to obtain binary data corresponding to unit rectangles in the another region, so that an excessively dense black or white region left in the two-dimensional code image can be reduced, and an aesthetic degree of the two-dimensional code image is improved.

To enable a generated artistic two-dimensional code image to have more features of the to-be-fused artistic image, improve an aesthetic degree of the artistic two-dimensional code image, and meet a service requirement, optionally, in this embodiment of this specification, the fusing the plurality of two-dimensional code images with the to-be-fused artistic image separately may specifically include:
fusing, for at least one two-dimensional code image in the plurality of two-dimensional code images, the at least one two-dimensional code image with a second region image of the to-be-fused artistic image, where the second region image is an image other than the first region image in the to-be-fused artistic image.

In this embodiment of this specification, an existing AI model may be used to perform image fusion on another region image and the second region image. When the AI model is used for fusion, a fusion region may be set. For example, the initial two-dimensional code image and the to-be-fused artistic image may be used as input of the model, and another region in the initial two-dimensional code image and a corresponding region in the to-be-fused artistic image may be set as a fusion region, so that the AI model performs processing based on the set region, to output the artistic two-dimensional code image. The initial two-dimensional code may be further extracted before AI model fusion is performed, to obtain the another region image. A corresponding region image of the another region image in the to-be-fused artistic image may also be extracted. The extracted another region image and the corresponding region image may be used as input of the AI model, to obtain a region fusion image output by the AI model. Then, the region fusion image may be covered onto the another region image in the initial two-dimensional code, to obtain the artistic two-dimensional code image.

In an implementation, optionally, the method in this embodiment of this specification may further include:
covering the first region image onto the padding region of the initial two-dimensional code image.

In this embodiment of this specification, before the two-dimensional code image is fused with the second region image of the to-be-fused artistic image, the first region image may be covered onto the padding region. Alternatively, after the two-dimensional code image is fused with the second region image of the to-be-fused artistic image, and before the artistic two-dimensional code image is generated, the first region image may be covered onto the padding region, so that identification of an artistic two-dimensional code is not affected while an aesthetic degree of the artistic two-dimensional code image is ensured.

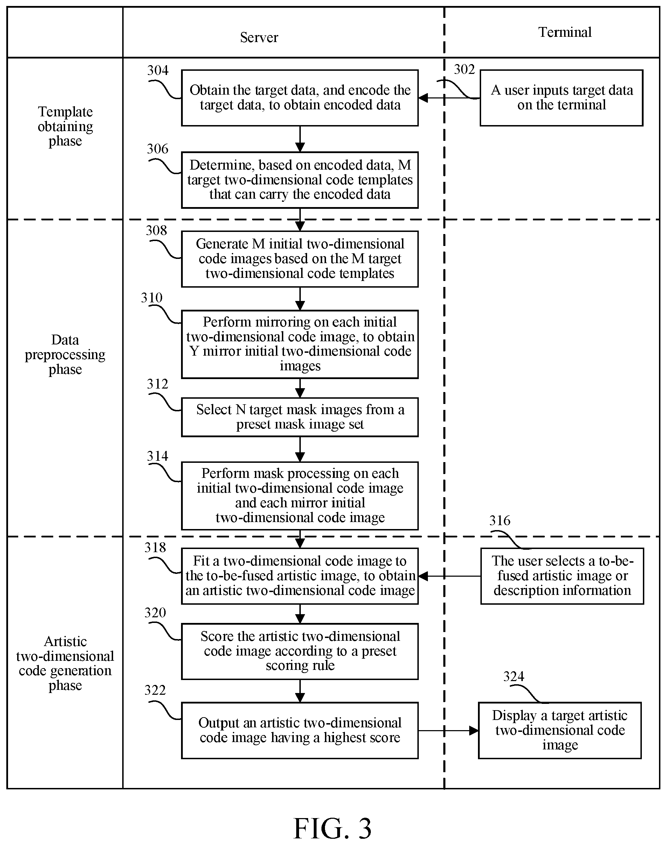

To describe an artistic two-dimensional code generation method according to an embodiment of this specification more clearly, FIG. 3 is a swimlane diagram of an artistic two-dimensional code generation method according to an embodiment of this specification. As shown in FIG. 3, the method may include a template obtaining phase, a data preprocessing phase, and an artistic two-dimensional code generation phase, and may specifically include the following steps.

Step 302: A user inputs target data on a terminal.

The target data in this embodiment of this specification may include at least one of character string data such as a website, a link, or a character that needs to be identified. The terminal may include at least an operation interface for the user to operate. The user may input the target data on the operation interface, and the user may further select an error correction level on the operation interface. On the operation interface, the error correction level is an unnecessary option, and a server may subsequently set, based on data such as a two-dimensional code template and a security level of information, an error correction level meeting a requirement.

Step 304: The server obtains the target data, and encodes the target data, to obtain encoded data.

Single encoding or hybrid encoding may be performed on the target data according to the foregoing coding scheme, to obtain a plurality of different data sequences, and a shortest data sequence may be used as the encoded data. Alternatively, the target data may be encoded according to a coding scheme specified by the user, to obtain the encoded data.

Step 306: The server determines, based on the encoded data, M target two-dimensional code templates that can carry the encoded data.

In this embodiment of this specification, a two-dimensional code template may be determined based on data capacities of two-dimensional code templates of various versions and a length of encoded data of the target data. If the user sets the error correction level, a two-dimensional code template that can accommodate the encoded data may be further determined based on the length of the encoded data and the error correction level. The M two-dimensional code templates may include templates having a same version but different error correction levels, templates having different versions but a same error correction level, templates having different error correction levels and different versions, and the like.

Step 308: The server generates M initial two-dimensional code images based on the M target two-dimensional code templates.

During actual application, a binary encode flow corresponding to each two-dimensional code template may be obtained based on a padding requirement of each two-dimensional code template and encoded data corresponding to the target data, and the binary encode flow may be padded into a corresponding two-dimensional code template in a padding order, to obtain the initial two-dimensional code image.

Step 310: The server may perform mirroring on each initial two-dimensional code image to obtain Y mirror initial two-dimensional code images.

In this embodiment of this specification, an existing mirroring means may be used to perform mirroring on some or all of the initial two-dimensional code images. Y may be a value less than or equal to M.

Step 312: Select N target mask patterns from preset mask patterns for each of the M initial two-dimensional code images and the Y mirror initial two-dimensional code images.

In this embodiment of this specification, the selected target mask pattern may be an existing mask pattern, or may be a customized mask pattern. This is not specifically limited herein.

Step 314: Perform mask processing on each initial two-dimensional code image and each mirror initial two-dimensional code image based on the N target mask patterns, to obtain K two-dimensional code images.

In this embodiment of this specification, each initial two-dimensional code image on which mirroring is not performed may be separately processed based on the target mask pattern, to obtain M×N two-dimensional code images. Each mirror initial two-dimensional code image on which mirroring is performed may be separately processed based on the target mask pattern, to obtain Y×N two-dimensional code images. K may be a sum of the M×N two-dimensional code images and the Y×N two-dimensional code images. It may be understood that, a first pattern part of the N mask patterns may alternatively be selected for processing on the initial two-dimensional code image, and a second pattern part of the N mask patterns may be selected for processing on the mirror initial two-dimensional code image. There is an overlapped part between the first pattern part and the second pattern part. If a padding region in the initial two-dimensional code image is padded with existing repeatable data, mask processing may be performed on the entire initial two-dimensional code image and mirror initial two-dimensional code image. If a padding region in the initial two-dimensional code image is padded with a data sequence obtained by performing binarization processing on a first region image in a to-be-fused artistic image, mask processing may be performed on another region different from the padding region.

During actual application, an obtained two-dimensional code image may alternatively be rotated. The initial two-dimensional code image may be rotated, or a mirror-processed two-dimensional code may be rotated, or a two-dimensional code image on which mask processing is performed may be processed. It may be understood that a processing order of the foregoing described processing manners such as mask image processing, the mirroring, and rotation may be set based on an actual requirement. For example, the two-dimensional code image may be processed in an order of mirroring, rotation, and masking, or may be processed in an order of rotation, mirroring, and masking, or may be processed in an order of masking, rotation, and mirroring, or the like. This is not specifically limited herein. A plurality of processing manners or one processing manner may be selected to use for one two-dimensional code image. This may also be set based on an actual requirement, and is not specifically limited herein.

Step 316: The user may select a to-be-fused artistic image or input description information on the terminal.

In this embodiment of this specification, the terminal may include at least an operation interface for selecting an artistic image by the user, and the interface may be the same as or different from the interface for inputting the target data by the user. The user may select or input, on the operation interface for selecting an artistic image, description labels, such as a person, an animal, and scenery, of the to-be-fused artistic image needed by the user. The to-be-fused artistic image may be generated based on the description labels by using an AI model. The user may alternatively select, as the to-be-fused artistic image, an image from a preset image library displayed on the operation interface for selecting an artistic image. It may be understood that the to-be-fused artistic image may be a dynamic image, or may be a static image.

Step 318: The server obtains the to-be-fused artistic image, and fits the two-dimensional code image to the to-be-fused artistic image, to obtain an artistic two-dimensional code image.

In this embodiment of this specification, if the padding region in the two-dimensional code image is padded with the data sequence obtained by performing binarization processing on the first region image in the to-be-fused artistic image, a second region image corresponding to another region in the two-dimensional code image in the to-be-fused artistic image may be determined, and the second region image is fitted to the another region in the two-dimensional code image by using an existing AI model, to obtain the artistic two-dimensional code image. If the padding region in the initial two-dimensional code image is padded with the existing repeatable data, the two-dimensional code image may be fused to the to-be-fused artistic image by using the existing AI model.

Step 320: The server scores the artistic two-dimensional code image according to a preset scoring rule.

The preset scoring rule in this embodiment of this specification may be a scoring rule that uses at least one of the following scoring manner: scoring aesthetics of the artistic two-dimensional code image, scoring a proportion of abnormal data of the artistic two-dimensional code image, or scoring similarity between a feature in the artistic two-dimensional code image and a feature of the to-be-fused artistic image, or may be that a weighted summation manner is used in a plurality of scoring manners to calculate a score of each artistic two-dimensional code image.

Step 322: The server outputs an artistic two-dimensional code image having a highest score.

In this embodiment of this specification, sorting may be performed based on the scores of the artistic two-dimensional code images, and the artistic two-dimensional code image having a highest score is selected as a target artistic two-dimensional code image meeting a service requirement, or an artistic two-dimensional code image having a score higher than a threshold score is selected as the target artistic two-dimensional code image.

Step 324: The terminal displays the target artistic two-dimensional code image.

In this embodiment of this specification, the terminal may display the artistic two-dimensional code image on a display interface. There may be one or more artistic two-dimensional code images displayed on the display interface. If there are a plurality of displayed artistic two-dimensional code images, the user may perform selection based on a requirement. The user may select, on the display interface, to save the artistic two-dimensional code image as a picture, or may select to transmit the artistic two-dimensional code image to a target object or share the artistic two-dimensional code image with a target object. The display interface may include a printing control, so that the user can select to print a paper-based artistic two-dimensional code image.

According to the foregoing method, a plurality of artistic two-dimensional code images may be obtained, and an artistic two-dimensional code image meeting a service requirement may be selected from the plurality of artistic two-dimensional code images, so that aesthetics and a success rate of identification of the artistic two-dimensional code image can be improved.

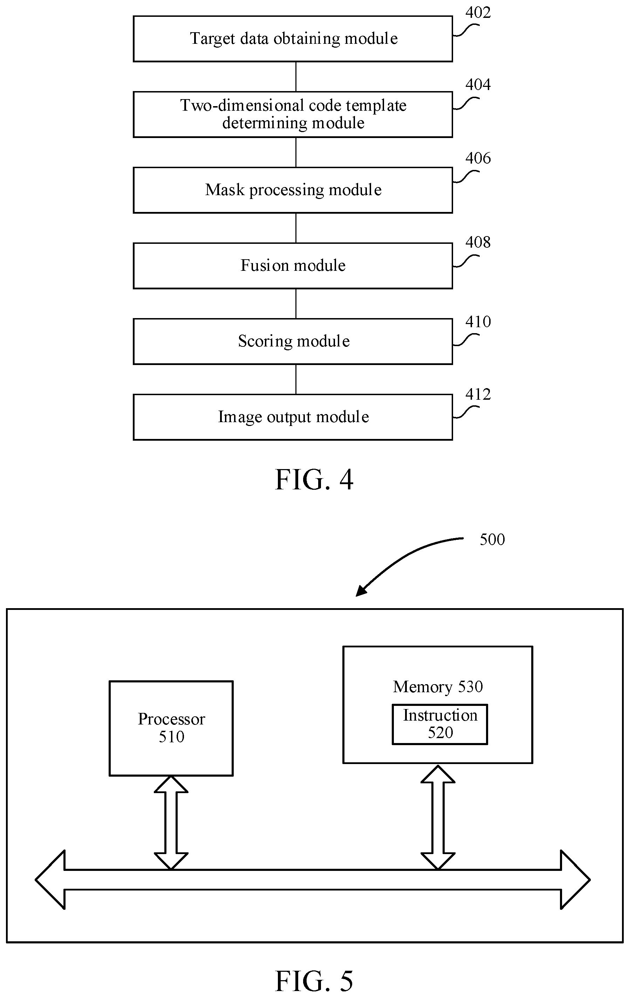

Based on the same concept, an embodiment of this specification further provides an apparatus corresponding to the foregoing method. FIG. 4 is a schematic diagram of a structure of an artistic two-dimensional code generation apparatus according to an embodiment of this specification. As shown in FIG. 4, the apparatus may include:
a target data obtaining module 402, configured to obtain target data used for being carried in a two-dimensional code image;
a two-dimensional code template determining module 404, configured to determine a two-dimensional code template based on a length of encoded data corresponding to the target data;
a mask processing module 406, configured to process, based on a first quantity of mask patterns, an initial two-dimensional code image that is generated for the target data based on the two-dimensional code template, to obtain a plurality of two-dimensional code images, where the first quantity of mask patterns includes a plurality of different mask patterns;
a fusion module 408, configured to fuse the plurality of two-dimensional code images with a to-be-fused artistic image separately, to obtain a plurality of artistic two-dimensional code images;
a scoring module 410, configured to perform availability evaluation on the plurality of artistic two-dimensional code images according to a preset availability evaluation rule, to obtain an evaluation score corresponding to each artistic two-dimensional code image; and
an image output module 412, configured to output an artistic two-dimensional code image having a highest evaluation score.

Based on the same concept, an embodiment of this specification further provides a device corresponding to the foregoing method.

FIG. 5 is a schematic diagram of a structure of an artistic two-dimensional code generation device according to an embodiment of this specification. As shown in FIG. 5, the device 500 may include:
at least one processor 510; and
a memory 530 in communication connection with the at least one processor.

The memory 530 stores instructions 520 executed by the at least one processor 510. The instructions are executed by the at least one processor 510, to cause the at least one processor 510 to:
obtain target data used for being carried in a two-dimensional code image;
determine a two-dimensional code template based on a length of encoded data corresponding to the target data;
process, based on a first quantity of mask patterns, an initial two-dimensional code image that is generated for the target data based on the two-dimensional code template, to obtain a plurality of two-dimensional code images, where the first quantity of mask patterns includes a plurality of different mask patterns;
fuse the plurality of two-dimensional code images with a to-be-fused artistic image separately, to obtain a plurality of artistic two-dimensional code images;
perform availability evaluation on the plurality of artistic two-dimensional code images according to a preset availability evaluation rule, to obtain an evaluation score corresponding to each artistic two-dimensional code image; and
output an artistic two-dimensional code image having a highest evaluation score.

Based on the same concept, an embodiment of this specification further provides a computer-readable medium corresponding to the foregoing method. The computer-readable medium stores computer-readable instructions, and the computer-readable instructions may be executed by a processor to implement the foregoing artistic two-dimensional code generation method.

Embodiments of this specification are all described in a progressive manner, for same or similar parts in embodiments, refer to these embodiments, and descriptions of each embodiment focus on a difference from other embodiments. In particular, the device shown in FIG. 5 is basically similar to the method embodiment, and therefore is only briefly described. For related parts, refer to partial descriptions in the method embodiment.

In the 1990s, improvements in a technology can be clearly categorized as hardware improvements (for example, improvements to a circuit structure such as a diode, a transistor, and a switch) and software improvements (improvements to a method procedure). However, with the development of technologies, improvements of many method procedures can be considered as direct improvements of hardware circuit structures. Designers almost all program an improved method procedure to a hardware circuit, to obtain a corresponding hardware circuit structure. Therefore, it does not mean that the improvement of a method procedure cannot be implemented by using a hardware entity module. For example, a programmable logic device (Programmable Logic Device, PLD) (such as a field programmable gate array (Field Programmable Gate Array, FPGA)) is an integrated circuit whose logic function is determined by a user by programming the device. The designers perform voluntary programming to "integrate" a digital system into a single PLD without requiring a chip manufacturer to design and prepare a dedicated integrated circuit chip. In addition, instead of making an integrated circuit chip manually, the programming is mostly implemented by using "logic compiler (logic compiler)" software, which is similar to a software compiler used to write programs. An original code before compiling is also written in a specific programming language, which is referred to as hardware description language (Hardware Description Language, HDL). There are many types of HDL, such as advanced boolean expression language (Advanced Boolean Expression Language, ABEL), altera hardware description language (Altera Hardware Description Language, AHDL), Confluence, cornell university programming language (Cornell University Programming Language, CUPL), HDCal, java hardware description language (Java Hardware Description Language, JHDL), Lava, Lola, MyHDL, PALASM, and ruby hardware description language (Ruby Hardware Description Language, RHDL). Currently, very-high-speed integrated circuit hardware description language (Very-High-Speed Integrated Circuit Hardware Description Language, VHDL) and Verilog are most commonly used. A person skilled in the art should also understand that as long as a method procedure is logically programmed and then programmed to an integrated circuit by using the foregoing hardware description language, a hardware circuit that implements the logical method procedure can be easily obtained.

The controller can be implemented in any suitable manner. For example, the controller can take the form of, for example, a microprocessor or processor and a computer-readable medium storing computer-readable program code (for example, software or firmware) executable by the processor (microprocessor), a logic gate, a switch, an application specific integrated circuit (Application Specific Integrated Circuit, ASIC), a programmable logic controller, and an embedded microcontroller. Examples of the controller include, but are not limited to, the following microcontrollers: ARC 625D, Atmel AT91SAM, Microchip PIC18F26K20, and Silicone Labs C8051F320. A memory controller can also be implemented as a part of control logic of the memory. A person skilled in the art also appreciates that, in addition to implementing, by logically programming the method steps, the controller in the form of pure computer-readable program code, it is also possible to implement the controller in the form of a logic gate, switch, application specific integrated circuit, programmable logic controller, embedded microcontroller, and other forms to achieve the same function. Such a controller can thus be considered as a hardware component and apparatuses included therein for implementing various functions can also be considered as structures inside the hardware component. Alternatively, apparatuses configured to implement various functions can be considered as both software modules implementing the method and structures inside the hardware component.

The system, the apparatus, the module or the unit described in the foregoing embodiments may be specifically implemented by a computer chip or an entity, or implemented by a product having a function. A typical device for implementation is a computer. Specifically, for example, the computer may be a personal computer, a laptop computer, a cellular phone, a camera phone, a smart phone, a personal digital assistant, a media player, a navigation device, an email device, a game console, a tablet computer, a wearable device, or a combination of any of these devices.

For ease of description, when the apparatus is described, the apparatus is divided into units according to functions, which are separately described. It is clear that, in implementation of this application, the functions of the units may be implemented in the same piece of or a plurality of pieces of software and/or hardware.

A person skilled in the art should understand that embodiments of the present invention may be provided as a method, a system, or a computer program product. Therefore, the present invention may use a form of hardware-only embodiments, software-only embodiments, or embodiments with a combination of software and hardware. Moreover, the present invention may use a form of a computer program product that is implemented on one or more computer-usable storage media (including but not limited to a disk memory, a compact disc read-only memory (CD-ROM), an optical memory, and the like) that include computer-usable program code.

The present invention is described with reference to the flowcharts and/or block diagrams of the method, the device (system), and the computer program product according to embodiments of the present invention. It should be understood that computer program instructions can implement each procedure and/or block in the flowcharts and/or block diagrams and a combination of procedures and/or blocks in the flowcharts and/or block diagrams. These computer program instructions may be provided to a general-purpose computer, a special-purpose computer, an embedded processor, or a processor of another programmable data processing device to generate a machine, so that an apparatus configured to implement functions specified in one or more procedures in the flowcharts and/or one or more blocks in the block diagrams is generated by using instructions executed by the computer or the processor of another programmable data processing device.

These computer program instructions may alternatively be stored in a computer-readable memory that can instruct a computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

These computer program instructions may be further loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

In a typical configuration, a computing device includes one or more processors (CPU), an input/output interface, a network interface, and a memory.

The memory may include forms such as a non-volatile memory, a random access memory (RAM) and/or a non-volatile memory in a computer-readable medium, for example, a read-only memory (ROM) or a flash memory (flash RAM). The memory is an example of the computer-readable medium.

The computer-readable medium includes a non-volatile medium and a volatile medium, a removable medium and a non-removable medium, which may implement storage of information by using any method or technology. The information may be computer-readable instructions, a data structure, a program module, or other data. Examples of the storage medium of the computer include, but are not limited to, a phase change memory (PRAM), a static random access memory (SRAM), a dynamic random access memory (DRAM), another type of random access memory (RAM), a read-only memory (ROM), an electrically erasable programmable read-only memory (EEPROM), a flash memory or another memory technology, a compact disc read-only memory (CD-ROM), a digital versatile disc (DVD) or another optical storage, a magnetic cassette, a magnetic disk storage or another magnetic storage device or any other non-transmission medium, and may be used to store information that can be accessed by the computing device. According to limitations of this specification, the computer-readable medium does not include transitory computer-readable media (transitory media), such as a modulated data signal and a modulated carrier.

It should be further noted that the terms "include", "comprise", or any variants thereof are intended to cover non-exclusive inclusion. Therefore, a process, method, article, or device that includes a series of elements not only includes such elements, but also includes other elements not specified expressly, or may include inherent elements of the process, method, article, or device. Unless otherwise specified, an element limited by "include a/an..." does not exclude other same elements existing in the process, the method, the article, or the device that includes the element.

A person skilled in the art should understand that embodiments of this application may be provided as a method, a system, or a computer program product. Therefore, this application may take the form of hardware-only embodiments, software-only embodiments, or embodiments with a combination of software and hardware. Moreover, this application may use a form of a computer program product that is implemented on one or more computer-usable storage media (including but not limited to a disk memory, a CD-ROM, an optical memory, and the like) that include computer-usable program code.

This application can be described in the general context of computer-executable instructions executed by a computer, for example, a program module. Generally, the program module includes a routine, a program, an object, a component, a data structure, and the like for executing a particular task or implementing a particular abstract data type. This application can also be practiced in a distributed computing environment in which tasks are performed by remote processing devices that are connected through a communication network. In a distributed computing environment, the program module may be located in both local and remote computer storage media including storage devices.

The foregoing descriptions are merely embodiments of this application, but are not intended to limit this application. For a person skilled in the art, various modifications and variations can be made to this application. Any modification, equivalent replacement, or improvements made without departing from the spirit and principle of this application shall fall within the scope of the claims of this application.

## Claims

1. An artistic two-dimensional code generation method, comprising:
obtaining target data used for being carried in a two-dimensional code image;
determining a two-dimensional code template based on a length of encoded data corresponding to the target data;
processing, based on a first quantity of mask patterns, an initial two-dimensional code image that is generated for the target data based on the two-dimensional code template, to obtain a plurality of two-dimensional code images, wherein the first quantity of mask patterns comprises a plurality of different mask patterns;
fusing the plurality of two-dimensional code images with a to-be-fused artistic image separately, to obtain a plurality of artistic two-dimensional code images;
performing availability evaluation on the plurality of artistic two-dimensional code images according to a preset availability evaluation rule, to obtain an evaluation score corresponding to each artistic two-dimensional code image; and
outputting an artistic two-dimensional code image having a highest evaluation score.

2. The method according to claim 1, wherein the method further comprises:
performing mirroring on the initial two-dimensional code image, to obtain a mirror initial two-dimensional code image; and
processing the mirror initial two-dimensional code image based on a second quantity of mask patterns, to obtain a plurality of mirror two-dimensional code images, wherein the second quantity of mask patterns comprises one or more different mask patterns; and
the fusing the plurality of two-dimensional code images with a to-be-fused artistic image separately specifically comprises:
fusing the plurality of two-dimensional code images and the plurality of mirror two-dimensional code images with the to-be-fused artistic image separately.

3. The method according to claim 1, wherein the two-dimensional code template comprises a plurality of two-dimensional code templates whose capacity is greater than the length of the encoded data corresponding to the target data; and
the processing, based on a first quantity of mask patterns, an initial two-dimensional code image that is generated for the target data based on the two-dimensional code template specifically comprises:
processing, for any two-dimensional code template in the plurality of two-dimensional code templates based on the first quantity of mask patterns, the initial two-dimensional code image that is generated for the target data based on the any two-dimensional code template.

4. The method according to claim 3, wherein the plurality of two-dimensional code templates comprise two-dimensional code templates of different versions and/or two-dimensional code templates of different error correction levels.

5. The method according to claim 1, wherein the method further comprises:
determining a coding scheme based on a character type comprised in the target data; and
encoding the target data according to the coding scheme, to obtain the encoded data.

6. The method according to claim 1, wherein the method further comprises:
encoding the target data according to a plurality of coding schemes, to obtain a plurality of pieces of candidate encoded data; and
selecting encoded data having a shortest length from the plurality of pieces of candidate encoded data as the encoded data corresponding to the target data.

7. The method according to claim 5, wherein the method further comprises:
if the target data comprises a digit, encoding the data according to a first coding rule; and
if the target data comprises an uppercase letter, encoding the uppercase letter according to a second coding rule.

8. The method according to claim 6, wherein the plurality of coding schemes comprise a coding scheme for encoding in a single coding mode and/or a coding scheme for encoding in a hybrid coding mode.

9. The method according to claim 1, wherein the performing availability evaluation on the plurality of artistic two-dimensional code images according to a preset availability evaluation rule specifically comprises:
obtaining, for any artistic two-dimensional code image in the plurality of artistic two-dimensional code images, binary values of a plurality of sampling points in the any artistic two-dimensional code image;
determining, based on the binary values of the plurality of sampling points, an abnormal sampling point existing in the plurality of sampling points, wherein a binary value of the abnormal sampling point is inconsistent with a preset binary value, and the preset binary value is a binary value in an encoded data stream used for generating the initial two-dimensional code image; and
performing identifiability evaluation on each artistic two-dimensional code image based on a quantity of abnormal sampling points.

10. The method according to claim 1, wherein the performing availability evaluation on the plurality of artistic two-dimensional code images according to a preset availability evaluation rule specifically comprises:
evaluating each artistic two-dimensional code image by using a pre-trained beautification degree evaluation model.

11. The method according to claim 1, wherein a method for generating the initial two-dimensional code image comprises:
obtaining a first region image that is in the to-be-fused artistic image and that corresponds to a padding region in the two-dimensional code template, wherein the padding region is a region in the two-dimensional code template for placing a padding bit character in an encoded data stream;
generating, based on a binary sequence value corresponding to the first region image, a padding data sequence in a padding bit region in the encoded data stream corresponding to the two-dimensional code template; and
generating the initial two-dimensional code image based on the encoded data corresponding to the target data and the padding data sequence.

12. The method according to claim 11, wherein the processing, based on a first quantity of mask patterns, an initial two-dimensional code image that is generated for the target data based on the two-dimensional code template specifically comprises:
processing another region different from the padding region in the initial two-dimensional code image based on the first quantity of mask patterns.

13. The method according to claim 12, wherein the fusing the plurality of two-dimensional code images with a to-be-fused artistic image separately specifically comprises:
fusing, for at least one two-dimensional code image in the plurality of two-dimensional code images, the at least one two-dimensional code image with a second region image of the to-be-fused artistic image, wherein the second region image is an image other than the first region image in the to-be-fused artistic image.

14. An artistic two-dimensional code generation apparatus, comprising:
a target data obtaining module, configured to obtain target data used for being carried in a two-dimensional code image;
a two-dimensional code template determining module, configured to determine a two-dimensional code template based on a length of encoded data corresponding to the target data;
a mask processing module, configured to process, based on a first quantity of mask patterns, an initial two-dimensional code image that is generated for the target data based on the two-dimensional code template, to obtain a plurality of two-dimensional code images, wherein the first quantity of mask patterns comprises a plurality of different mask patterns;
a fusion module, configured to fuse the plurality of two-dimensional code images with a to-be-fused artistic image separately, to obtain a plurality of artistic two-dimensional code images;
a scoring module, configured to perform availability evaluation on the plurality of artistic two-dimensional code images according to a preset availability evaluation rule, to obtain an evaluation score corresponding to each artistic two-dimensional code image; and
an image output module, configured to output an artistic two-dimensional code image having a highest evaluation score.

15. An artistic two-dimensional code generation device, comprising:
at least one processor; and
a memory in communication connection with the at least one processor, wherein
the memory stores instructions executable by the at least one processor, and the instructions are executed by the at least one processor, to cause the at least one processor to:
obtain target data used for being carried in a two-dimensional code image;
determine a two-dimensional code template based on a length of encoded data corresponding to the target data;
process, based on a first quantity of mask patterns, an initial two-dimensional code image that is generated for the target data based on the two-dimensional code template, to obtain a plurality of two-dimensional code images, wherein the first quantity of mask patterns comprises a plurality of different mask patterns;
fuse the plurality of two-dimensional code images with a to-be-fused artistic image separately, to obtain a plurality of artistic two-dimensional code images;
perform availability evaluation on the plurality of artistic two-dimensional code images according to a preset availability evaluation rule, to obtain an evaluation score corresponding to each artistic two-dimensional code image; and
output an artistic two-dimensional code image having a highest evaluation score.

16. A computer-readable medium, wherein the computer-readable medium stores computer-readable instructions, and the computer-readable instructions are executable by a processor to implement the artistic two-dimensional code generation method according to any one of claims 1 to 13.
